# EUROPEAN PATENT APPLICATION

(11) **EP 4 455 493 A1**
(43) Date of publication of application: **30.10.2024**
(21) Application number: 24172833.6
(22) Date of filing: 26.04.2024
(51) Int. Cl.: F16B 2/08, F16B 5/06, H02G 3/32

(54) **FIXINGS WITH CUTTING GUIDES**

(30) Priority: 28.04.2023 US 202363499096 P
(71) Applicant: HellermannTyton Corporation, Milwaukee, WI 53224 (US)
(72) Inventor: Klos, Scott G., Grafton, Wisconsin (US); Cors, Mark W., St. Francis, Wisconsin (US)
(74) Representative: Hernandez, Yorck

(57) **Abstract**

A fixing with a cutting guide may include a body section configured to mount on a workpiece, an object support configured to support a component, and a tie aperture configured to receive a cable tie. The object support includes a support arm that includes an outer surface, a first flange that extends from the outer surface along a first flange axis, a second flange that extends from the outer surface parallel to the first flange and spaced apart from the first flange, and a third flange that extends from the outer surface parallel to the first and second flanges. The third flange is positioned between the first and second flanges and is spaced apart from the first and second flanges. A first receiver is defined between the first and third flanges and a second receiver is defined between the second and third flanges.

## Description

### CROSS-REFERENCE TO RELATED APPLICATION(S)

This application claims the benefit of U.S. Provisional Patent Application Serial No. 63/499,096 filed on April 28, 2023, the disclosure of which is incorporated by reference herein in its entirety.

### BACKGROUND

A fixing is used to attach a component to a workpiece (e.g., a support beam, a housing). Fixings are frequently used in machinery installations to locate a component in a fixed position relative to other components and/or equipment. A fixing may include a mounting section configured to attach to the workpiece and an object support that is configured to support the component.

One type of a fixing is a cable tie mount fixing, where the object support is configured to connect with a cable tie to secure the component(s) to the fixing. Some cable tie mount fixings include a pair of opposing walls that define a saddle therebeween. The opposing walls have cable tie passageways defined therethrough, which are configured to receive the cable tie, which is looped through the cable tie passageways to secure the components in the saddle.

### SUMMARY

This document describes fixings with cutting guides. In aspects, the fixings with cutting guides are cable tie mount fixings.

In some aspects, the techniques described herein relate to a fixing including: a body section configured to mount on a workpiece; an object support configured to support a component, the object support including: a support arm extending from the body section, the support arm including: an outer surface; a first flange, the first flange extending from the outer surface along a first flange axis; a second flange, the second flange extending from the outer surface, the second flange parallel to the first flange, the second flange spaced apart from the first flange; a third flange, the third flange extending from the outer surface, the third flange parallel to the first and second flanges, the third flange positioned between the first and second flanges, the third flange spaced apart from the first and second flanges; a first receiver defined between the first and third flanges; a second receiver defined between the second and third flanges; and a tie aperture configured to receive a cable tie, the tie aperture defined through at least one of the body section or the object support.

In some aspects, the techniques described herein relate to a fixing including: a body section configured to mount on a workpiece; an object support configured to support a component, the object support including: a support arm extending from the body section, the support arm including: an outer surface; a first flange, the first flange extending from the outer surface along a first flange axis; a second flange, the second flange extending from the outer surface, the second flange parallel to the first flange, the second flange spaced apart from the first flange; a third flange, the third flange extending from the outer surface, the third flange parallel to the first and second flanges, the third flange positioned between the first and second flanges, the third flange spaced apart from the first and second flanges; a first receiver defined between the first and third flanges; a second receiver defined between the second and third flanges; and a tie aperture configured to receive a cable tie, the tie aperture defined through at least one of the body section or the object support; a second object support configured to support a second component, the second object support including: a second support arm extending from the body section, the second support arm including: a second outer surface; a fourth flange, the fourth flange extending from the second outer surface along a fourth flange axis; a fifth flange, the fifth flange extending from the second outer surface, the fifth flange parallel to the fourth flange, the fifth flange spaced apart from the fourth flange; a sixth flange, the sixth flange extending from the second outer surface, the sixth flange parallel to the fourth and fifth flanges, the sixth flange positioned between the fourth and fifth flanges, the sixth flange spaced apart from the fourth and fifth flanges; a third receiver defined between the fourth and fifth flanges; a fourth receiver defined between the fifth and sixth flanges; and a second tie aperture configured to receive a second cable tie, the second tie aperture defined through at least one of the body section or the second object support.

This Summary is provided to introduce simplified concepts of fixings with cutting guides, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of fixings with cutting guides are described with reference to the following Drawings, in which the use of the same numbers in different instances may indicate like features and/or components.
FIG. 1 is a schematic illustration of a fixing with a cutting guide.
FIG. 2A is a perspective view of a fixing with a cutting guide.
FIG. 2B is a plan view of the fixing of FIG. 2A.
FIG. 2C is a front side view of the fixing of FIG. 2A, it being understood that the opposite side is a mirror image of that shown.
FIG. 2D is a first end view of the fixing of FIG. 2A, it being understood that the opposite side is a mirror image of that shown.
FIG. 2E is a first cross-section view of the fixing of FIG. 2A, along line 2E-2E in FIG. 2B.
FIG. 2F is a second cross-section view of the fixing of FIG. 2A, along line 2E-2E in FIG. 2B.
FIG. 3A is a perspective view of a fixing with a cutting guide.
FIG. 3B is a plan view of the fixing of FIG. 3A.
FIG. 3C is a front side view of the fixing of FIG. 3A, it being understood that the opposite side is a mirror image of that shown.
FIG. 3D is a first end view of the fixing of FIG. 3A, it being understood that the opposite side is a mirror image of that shown.

### DETAILED DESCRIPTION

Described and illustrated are aspects of improved fixings with cutting guides (each referred to herein as a "fixing"). In aspects, the fixings are cable tie mount fixings. The fixings are configured for receiving, securing, and/or supporting one or more bundles of one or more components on or to a workpiece. A fixing may be utilized in a system that also includes a component(s), a workpiece, and/or a cable tie(s).

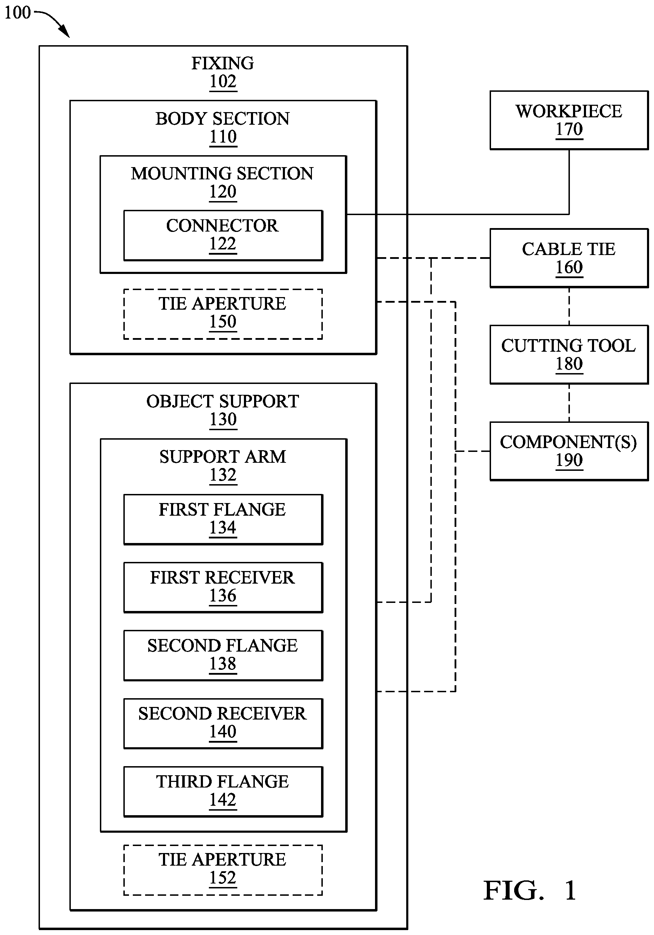

FIG. 1 is a schematic illustration of a system 100 that includes a fixing 102, a cable tie 160, a workpiece 170, a cutting tool 180, and component(s) 190. The fixing 102 is configured for receiving, securing, and/or supporting the component(s) 190 on or to the workpiece 170. The cable tie 160 may be utilized to attach the component(s) 190 to the fixing 102.

The component(s) 190 may include one or more objects (e.g., elongated articles, wires, hoses, tubes, cables, and the like) and/or bundles thereof. The workpiece 170 may include one or more support structures (e.g., a vehicle chassis, a panel, a frame rail, a support beam, a housing, or the like). The workpiece 170 may include a mounting aperture defined therein (e.g., a slot, a channel, a bore, a threaded hole, and the like) and/or a mounting surface. The mounting aperture and/or the mounting surface of the workpiece may be configured to receive a connector, as discussed below.

The cable tie 160 (e.g., strapping material, a hook-and-loop fastening strap, a plastic band, a metal band, string, twine, a wire, and the like) is utilized to attach (e.g., "cinch down") component(s) to the fixing (e.g., on an object support (e.g., support arm), in a receiver of a support arm). In aspects, the cable tie 160 includes a head end and a tail end. The head end may include a locking head and the tail end may include an elongated strap that extends from the locking head. In such a configuration, the elongated strap may be configured for insertion through the locking head to form a loop (e.g., a loop around a component(s) or bundle thereof). The locking head may include a pawl mechanism configured for engaging strap serrations defined on the elongated strap, thereby retaining the strap relative to the locking head. The locking head may include a release feature (e.g., unlocking tab, unlocking lever) configured to permit the pawl mechanism to be released from engagement with the strap serrations of the strap, thereby enabling the cable tie to be removed from securing the component(s). The release feature may be configured to enable an operator to digitally manipulate (e.g., utilizing a finger of the operator, utilizing a tool) the release feature to disengage the pawl teeth on the pawl from engagement with the strap serrations. Disengagement of the pawl teeth from the strap serrations permits the elongated strap to be withdrawn from the locking head and the cable tie to be removed from securing the component(s).

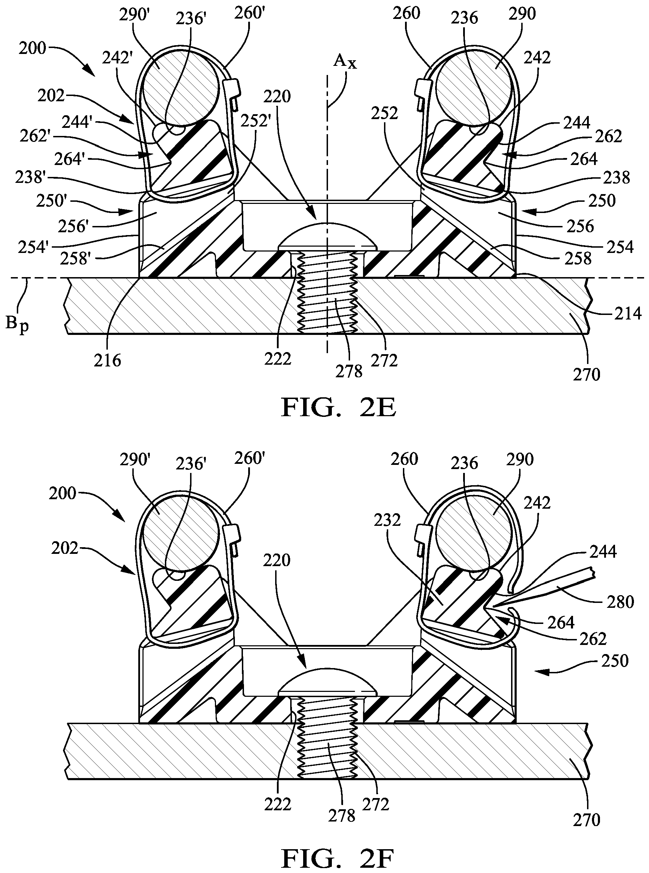

The fixing 102 includes a body section 110 having a base that is configured to mount on the workpiece 170. The base includes a base first end that extends to a base second end. The base defines a base plane. For the purposes of this disclosure, the terms "upward" and "downward" refer to the directions with respect to the base plane (e.g., base plane (Bp) in FIG. 2E) of the fixing 102). The term "upward" (e.g., upwardly) refers to the direction away from the base plane, whereas the term "downward" (e.g., downwardly) refers to the direction towards the base plane. The base plane may be orthogonal to a center axis (e.g., center axis (Ax) in FIG. 2E) of the fixing 102, described below. For the purposes of this disclosure, the terms "inward" and "outward" are used to refer to directions with respect to the center axis (e.g., center axis (Ax) in FIG. 2E) of the fixing 102. The term "inward" (e.g., inner, inwardly) refers to the direction that is toward (e.g., nearer) the center axis, whereas the term "outward" (e.g., outer, outwardly) refers to a direction opposite to "inward," that is, in a direction that is away from (e.g., further from) the center axis. The center axis may be orthogonal to the base plane (e.g., base plane (Bp) in FIG. 2E) of the fixing 102.

The body section 110 may include a mounting section 120, which is configured for attachment to the workpiece 170 at a desired location. In this way, the fixing 102 is configured for attachment to the workpiece 170 at the desired location via the mounting section 120. The mounting section 120 may be spaced apart from the base first end and the base second end. The mounting section 120 may include a connector 122 that is configured to attach the mounting section 120 to the workpiece 170. The connector 122 may include any common connection manner, including, but not limited to, a fastener (e.g., a blind hole fastener, a clamp fastener, a mechanical fastener, an arrowhead fastener, a fir-tree fastener, a mounting edge clip, a twist-lock fastener configured for receipt into the slot of a rail, a weld stud mount, a cable attachment, a hose attachment), an adhesive fastener, a friction fit, and the like. The connector 122 may be an aperture (e.g., mounting hole) that is defined through the mounting section 120, the aperture configured to receive a fastener (e.g., a bolt, a screw) that engages a mounting aperture (e.g., a bore) that is defined in the workpiece 170. In other aspects, the connector 122 may be configured to engage an elongated fastener (e.g., a stud, a threaded bolt) extending from the workpiece 170, may be configured to clamp onto an edge of the workpiece 170 (e.g., utilizing an edge clip), and/or the like. In aspects, the connector 122 is a fastener aperture (e.g., a recessed fastener aperture) that is defined through the mounting section 120, and the connector 122 is configured to receive a fastener (e.g., a threaded bolt, a screw, an M5 stud mount, an M6 stud mount) therethrough, which is configured to engage the workpiece 170 (e.g., engage a mounting aperture that is defined in the workpiece). In another example, the connector 122 may be a screw attachment that fastens with a screw and T-nut (e.g., Tee nut) to the workpiece 170 (e.g., a #8 (M4) screw that is configured for attachment into a panel surface or with a T-nut in frame). In another example, the mounting section 120 may utilize an adhesive fastener to mount to the mounting surface of the workpiece 170 and the connector 122 is a surface of the mounting section 120 to which the adhesive fastener is mounted. The adhesive fastener may be a double-sided adhesive tape, a double-stick adhesive foam, a pressure-sensitive adhesive tape, and the like. In other aspects, the workpiece 170 may attach to the fixing 102 via an elongated fastener (e.g., a stud, a threaded bolt) that extends from the workpiece 170, by the mounting section 120 clamping onto an edge of the workpiece 170, and the like.

The fixing 102 includes at least one object support 130, which is configured to support one or more component(s) 190. The component(s) 190 may be secured to the object support 130 via the cable tie 160. One or more component(s) 190 may be bundled together into a bundle by the cable tie 160. In aspects, the object support 130 (e.g., a saddle mount) includes at least one support arm 132 that is configured to space a supported component(s) 190 apart from the mounting section 120 and from the workpiece 170. In aspects, the fixing 102 may include a first object support that is spaced apart from a second object support. The support arm 132 may extend from the body section 110. The support arm 132 includes an outer surface. One or more flanges (e.g., first flange 134, second flange 138, third flange 142) are defined in, are defined relative to, and/or extend from the outer surface of the support arm 132. A flange may include a projecting element (e.g., a projection, a protrusion, a corner, an edge, a ridge, a rim, a ledge) that extends from the outer surface and/or along the outer surface. In aspects, the support arm 132 of the object support includes a first flange 134 that extends from the outer surface along a first flange axis, a second flange 138 that extends from the outer surface parallel to and spaced apart from the first flange 134, and a third flange 142 that extends from the outer surface parallel to the first and second flanges 134, 138. The third flange 142 may be positioned between the first and second flanges 134, 138 and spaced apart from the first and second flanges 134, 138. The first flange axis may be orthogonal to the center axis. The first flange 134, the second flange 138, and the third flange 142 may radially extend from the outer surface of the support arm 132.

The support arm 132 defines at least one receiver that may be positioned between a pair of spaced apart flanges. For example, the support arm 132 includes a first receiver 136 defined between the first flange 134 and the third flange 142, and the support arm 132 includes a second receiver 140 defined between the second flange 138 and the third flange 142. A receiver may be configured in a saddle configuration. In the saddle configuration, the receiver (e.g., first receiver 136, second receiver 140) defines a saddle (e.g., channel, chamfer, bevel, groove, notch) that is configured for receiving component(s) 190. A cable tie 160 may be used to attach the component(s) 190 to the fixing 102 (e.g., to the support arm 132), with the component(s) 190 held in the saddle. In the saddle configuration, the receiver (e.g., first receiver 136, second receiver 140) is configured to locate (e.g., position, hold) the component(s) 190 in a routed position on the support arm 132. The receiver (e.g., first receiver 136, second receiver 140) may include a shape configured to receive the component(s) 190 (e.g., a curved shape, a U-shape, and the like). The fixing 102 may define other saddles that are configured for receiving component(s) 190 (e.g., a saddle located outside of a receiver, a saddle defined between the support arm 132 and a spaced apart second support arm, and the like).

Because the component(s) 190 may be tightly bound (e.g., compressively) with a cable tie 160 on a receiver, if attached component(s) 190 need to be reworked (e.g., to add and/or remove one or more components), it can be difficult for a user to cut off the cable tie 160 without causing damage (e.g., nicking) to one or more of the component(s) 190. A receiver (e.g., first receiver 136, second receiver 140) may be configured as a cut zone. In the cut-zone configuration, a receiver defines a cutting guide that is configured to be bridged (e.g., spanned) by the cable tie 160. The cutting guide is configured to guide a user when the user acts to cut the cable tie 160 through use of a cutting tool 180 (e.g., a diagonal plier tool, wire cutters, side cutters, a bladed cutter, a knife, and the like) to free the component(s) 190 attached to the fixing 102 (e.g., held in a receiver of the fixing 102). The cutting guide may define a location for the user to position the cutting surface(s) of the cutting tool 180 when cutting the cable tie 160. In this way, damage to the component(s) 190 caused when removing the cable tie 160 by cutting during a rework process is prevented. Further, through such protection of the component(s) 190 from damage when cutting off the cable tie 160, rework is avoided, which decreases the time and labor involved in running cables during an installation process. In aspects, a fixing 102 may include one or more receivers configured in one or both of the saddle configuration or the cut-zone configuration.

The cutting guide may include one or more of the flanges (e.g., first flange 134, second flange 138, third flange 142) that are defined in, are defined relative to, and/or extend from the outer surface of the support arm 132. In this way, a pair of the flanges may elevate the cable tie 160 spaced apart from a surface (e.g., face, outside surface) of the object support 130 of the fixing 102, making it easier for the user to cut the cable tie 160 accurately.

The cutting guide may define a channel (e.g., a groove), which may be located between two of the flanges and which may be configured to receive the cutting tool 180 (e.g., a channel that is located between the second flange 138 and the third flange 142). In other aspects, the channel is defined on or within the surface of the fixing 102. A channel may have a shape configured to guide the cutting tool 180 (e.g., a V-shape). In other aspects, one or more cutting guides may be defined on one or more surfaces of the fixing 102 on one or more of the body section 110, the mounting section 120, and/or the object support 130.

A cutting guide may include features and/or geometry that are configured to protect the component(s) 190 from damage when a user cuts the cable tie 160 off the receiver. For example, the cutting guide may include one or more flanges that support (e.g., elevate) the cable tie 160 spaced apart from a surface (e.g., face) of the object support 130 of the fixing 102. In another example, one or more of the flanges (e.g., first flange 134, second flange 138, third flange 142) may define a sidewall that is configured to be positioned between the cutting tool 180 and the component(s) 190 when the cable tie 160 is cut off the support arm 132. When positioned between the cutting tool 180 and the component(s) 190, the sidewall may protect the component(s) 190 from inadvertent contact with the cutting tool 180 during the cutting operation.

The fixing 102 (e.g., a support arm 132 of a fixing 102) may include a tie aperture (e.g., a slot) through which the cable tie 160 may be passed to form a loop. The tie aperture may be configured to receive the cable tie 160, which is utilized to connect the component(s) 190 with the fixing 102. The tie aperture (e.g., tie aperture 150, tie aperture 152) may be configured to receive an end of the cable tie 160 (e.g., a tail of the cable tie), which is passed through the fixing 102 to orient the cable tie 160 in a position where the user can form a loop of the cable tie 160. The tie aperture may be defined in at least one of the body section 110 or the object support 130 (e.g., defined in the body section 110 as a tie aperture 150 and/or defined in the support arm 132 as a tie aperture 152).

The tie aperture (e.g., tie aperture 150) may include an inner opening adjacent to the mounting section 120, an outer opening in the base first end, and a passageway extending therebetween. The tie aperture (e.g., tie aperture 150) may define a ramp portion that is configured to guide the cable tie 160 into and through the passageway. The ramp portion may extend from the outer opening to the inner opening oblique to the base plane. In such a configuration, the user can insert the end of a cable tie 160 through the outer opening of the tie aperture (e.g., tie aperture 150). The user can then insert the cable tie 160 further into the passageway, so as to pass an additional portion of the cable tie 160 up a ramp portion of the passageway to exit the inner opening of the tie aperture. The user can then grasp the end of the cable tie 160, loop it around the component(s) 190, and connect the ends of the cable tie 160 together to bundle the component(s) 190 on the support arm 132 in the receiver (e.g., second receiver 140). The tie aperture (e.g., tie aperture 150) eliminates common obstructions for faster installation by the user. In this way, the time and labor involved in attaching components to a fixing is decreased.

When the cable tie 160 is formed into a loop around the tie aperture to attach the component(s) 190 to the support arm 132, the attached component(s) 190 are located in a position on the support arm 132 that is spaced apart from the mounting section 120, which may enable a fastener and/or the connector 122 to be accessible to the user after the component(s) 190 are attached to the fixing 102, without needing the user to first remove the attached component(s) 190 from the support arm 132. For example, the fastener may be accessible around a bundle formed of the component(s) 190 by a cable tie 160, which enables a user to manipulate the fastener to attach or detach the fixing 102 from the workpiece 170. This may decrease the time and labor involved in running cables during an installation process.

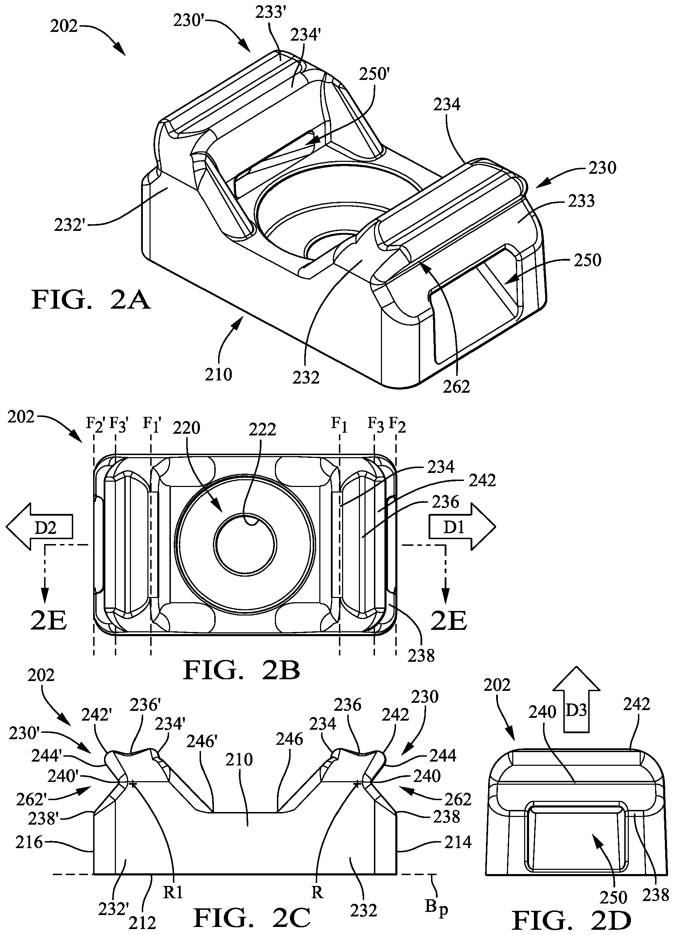

Referring now to FIGs. 2A-2F, illustrated is a system 200 that includes a cable tie mount fixing (fixing 202) with a cutting guide, a cable tie 260, a workpiece 270, a cutting tool 280, and component(s) 290. The fixing 202 is configured for receiving, securing, and/or supporting the component(s) 290 relative to the workpiece 270. The system 200 is similar to the system 100 illustrated in FIG. 1 and described above, except as described below. The fixing 202 is similar to the fixing 102 illustrated in FIG. 1 and described above, except as detailed below. Thus, the fixing 202 includes a body section 210, a mounting section 220, a connector 222, an object support (e.g., object support 230, object support 230'), a support arm (e.g., support arm 232, support arm 232'), flanges (e.g., a first flange 234, a first flange 234', a second flange 238, a second flange 238', a third flange 242, a third flange 242', a fourth flange 246, a fourth flange 246'), receivers (e.g., a first receiver 236, a first receiver 236', a second receiver 240, a second receiver 240'), and a tie aperture (e.g., tie aperture 250, tie aperture 250'). The first receiver 236 is defined between the first flange 234 and the third flange 242. The second receiver 240 is defined between the second flange 238 and the third flange 242. One or more of the first flange 234, the second flange 238, or the third flange 242 may extend orthogonal to the length of the fixing 202.

FIG. 2A is a perspective view of the fixing 202, FIG. 2B is a plan view of the fixing 202, FIG. 2C is a front side view of the fixing 202, and FIG. 2D is a first end view of the fixing 202. FIG. 2E is a first cross-section view of the fixing 202 and FIG. 2F is a second cross-section view of the fixing 202. The cross-section views are taken along line 2E-2E in FIG. 2B. In the cross-section views, environmental aspects are illustrated that are not present in FIG. 2B, namely, the cable tie 260, the workpiece 270, the cutting tool 280, and component(s) (e.g., component(s) 290).

The body section 210 includes a base 212 that is configured to mount on the workpiece 270. The base 212 includes a base first end 214 that extends to a base second end 216, which define a base plane (Bp) therebetween. The first receiver (e.g., first receiver 236 on the support arm 232, first receiver 236' on the support arm 232') is upwardly facing and faces away from the base plane (Bp). In aspects, the first receiver 236' on the support arm 232' may be referred to herein as the third receiver. A length of the fixing 202 may be defined between the base first end 214 and the base second end 216. The fixing 202 defines a center axis (Ax). The center axis may be orthogonal (e.g., perpendicular) to the base plane (Bp) of the fixing 202. The center axis (Ax) may be equally spaced apart from the object supports (230, 230'). The base plane (Bp) and the center axis (Ax) are illustrated in FIG. 2E.

In the aspect illustrated in FIG. 2D, the first receiver 236 on the support arm 232 and the first receiver 236' on the support arm 232' (aka the "third receiver") face in the same direction, which is illustrated as a third direction (D3). The second receiver (e.g., second receiver 240 on the support arm 232) is outwardly facing, faces away from the center axis (Ax), and faces in a first direction, which is illustrated as direction (D1) in FIG. 2B. The second receiver 240' on the support arm 232' is outwardly facing, faces away from the center axis (Ax), and faces in a second direction, which is illustrated as direction (D2) in FIG. 2B. In aspects, the second receiver 240' on the support arm 232' may be referred to herein as the fourth receiver. The first direction (D1) and the second direction (D2) may be opposite directions. The third direction (D3) may be orthogonal to the first direction (D1) and/or the second direction (D2).

The mounting section 220 is configured to attach the fixing 202 to the workpiece 270. The mounting section 220 of the fixing 202 includes a connector 222. In the fixing 202 illustrated, the connector 222 is a fastener aperture (e.g., a recessed fastener aperture) that is defined through the mounting section 220. The connector 222 is configured to receive a fastener therethrough. In FIGs. 2E and 2F, the fastener is illustrated as a bolt 278 that is configured to engage a mounting aperture 272 that is defined in the workpiece 270. In this way, the fixing 202 can be attached to the workpiece 270. In other aspects, the connector 222 may be of another form, as described above with respect to FIG. 1.

The fixing 202 may include one or more object supports (e.g., object support 230, object support 230'), which are configured to support one or more component(s) 290. The object supports (e.g., object support 230, object support 230') may be substantial mirror images of one another. The object support includes at least one support arm (e.g., support arm 232, support arm 232') that is configured to space the supported component(s) 290 apart from the mounting section 220 and/or from the workpiece 270.

The support arm 232 includes an outer surface (e.g., outer surface 233, outer surface 233'). One or more flanges (e.g., first flange 234, first flange 234', second flange 238, second flange 238', third flange 242, third flange 242') are defined in, are defined relative to, and/or extend from the outer surface of the support arm 232. In the aspect illustrated in FIGs. 2A-2F, the first flange 234 extends along a first flange axis (F1), the second flange 238 extends along a second flange axis (F2), and the third flange 242 extends along a third flange axis (F3), with the axes parallel to one another. Likewise, the first flange 234', second flange 238', and third flange 242' may define similar flange axes (e.g., a "fourth" flange axis (F1'), a "fifth" flange axis (F2'), a "sixth" flange axis (F3')). The first flange (e.g., first flange 234, first flange 234') is spaced apart from the second flange (e.g., second flange 238, second flange 238') and the third flange (e.g., third flange 242, third flange 242') is spaced apart from the respective first flange and the respective second flange. In the aspect illustrated in FIGs. 2A-2F, the third flange (e.g., third flange 242, third flange 242') is located between the first flange (e.g., first flange 234, first flange 234') and the second flange (e.g., second flange 238, second flange 238'). The first flange axis, the second flange axis, and/or the third flange axis may be orthogonal to the center axis. The first flange 234, the second flange 238, and the third flange 242 may radially extend from the outer surface 233 of the support arm 232, for example, relative to point (R) illustrated in FIG. 2C. The first flange 234', the second flange 238', and the third flange 242' may radially extend from the outer surface 233' of the support arm 232', for example, relative to point (R1) illustrated in FIG. 2C. In aspects, the first flange 234' may be referred to as a "fourth flange," the second flange 238' as a "fifth flange," and the third flange 242' as a "sixth flange."

The support arm (e.g., support arm 232, support arm 232') defines at least one receiver that is positioned between a pair of spaced apart flanges. A receiver may be configured as a saddle and/or as a cut zone, as described above with respect to the fixing 102 of FIG. 1. The support arm defines a first receiver (e.g., first receiver 236, first receiver 236') between a first pair of spaced apart flanges (e.g., first flange 234 and third flange 242, first flange 234' and third flange 242'). The support arm defines a second receiver (e.g., second receiver 240, second receiver 240') between a second pair of spaced apart flanges (e.g., second flange 238 and third flange 242, second flange 238' and third flange 242'). The first receiver is configured in the saddle configuration. In the saddle configuration, the first receiver defines a saddle that is configured for receiving component(s) 290. A cable tie (e.g., cable tie 260, cable tie 260') is used to attach the component(s) (e.g., component(s) 290, component(s) 290') to the saddle, as illustrated in FIG. 2E. In a saddle configuration, the first receiver is configured to locate (e.g., position, hold) the component(s) 290 in a routed position on the support arm. The first receiver may include a shape that is configured to receive the component(s) 290 (e.g., a curved shape). FIG. 2E illustrates the first receiver 236 in the saddle configuration, with a component(s) 290 received in the first receiver 236 and affixed to the saddle via a cable tie 260. In this way, the component(s) 290 are received in the first receiver 236 and attached to the support arm 232.

The fixing 202 may include a tie aperture (e.g., tie aperture 250, tie aperture 250') through which the cable tie 260 is passed to form a loop that connects the component(s) 290 with the fixing 202. The tie aperture is defined in at least one of the body section 210 or the object support 230 (e.g., in support arm 232, in support arm 232'). The tie aperture (e.g., tie aperture 250, tie aperture 250') may include an inner opening (e.g., inner opening 252, inner opening 252') adjacent to the mounting section 220, an outer opening (e.g., outer opening 254, outer opening 254') in the base end (e.g., base first end 214, base second end 216), and a passageway (e.g., passageway 256, passageway 256') extending therebetween. The tie aperture may define a ramp portion (e.g., ramp portion 258, ramp portion 258') that is configured to guide the cable tie 260 into and through the passageway. The ramp portion (e.g., ramp portion 258, ramp portion 258') may extend from the outer opening (e.g., outer opening 254, outer opening 254') to the inner opening (e.g., inner opening 252, inner opening 252') oblique to the base plane (Bp). In such a configuration, the user can insert an end of a cable tie 260 through the outer opening of the tie aperture and up the ramp portion of the passageway to exit the inner opening of the tie aperture. The user can then grasp the end of the cable tie 260, loop it around the component(s) 290, and connect the ends of the cable tie 260 together to bundle the component(s) 290 on the support arm (e.g., support arm 232, support arm 232') in the receiver (e.g., first receiver 236, first receiver 236').

FIG. 2F illustrates the second receiver (e.g., second receiver 240, second receiver 240') configured in the cut-zone configuration. In the cut-zone configuration, the second receiver defines a cutting guide (e.g., cutting guide 262, cutting guide 262') that is bridged (e.g., spanned) by the cable tie 260. The cutting guide is configured to guide a user when the user acts to cut the cable tie through use of a cutting tool (e.g., cutting tool 280) to free the component(s) attached to the fixing (e.g., held in a saddle of the fixing). The cutting guide defines a channel (e.g., channel 264, channel 264') within the outer surface (e.g., outer surface 233, outer surface 233') of the fixing 102. The channel may be located between the second flange (e.g., second flange 238, second flange 238') and the third flange (e.g., third flange 242, third flange 242'). The channel is configured to receive the cutting tool 280. In the aspect illustrated in FIGs. 2A-2F, the channel has a V-shape.

The third flange (e.g., third flange 242, third flange 242') may define a sidewall (e.g., sidewall 244, sidewall 244') that is configured to be positioned between the cutting tool 280 and the component(s) 290 when the cable tie 260 is cut off the support arm (e.g., support arm 232, support arm 232'). When positioned between the cutting tool 280 and the component(s) 290, the sidewall may protect the component(s) 290 from inadvertent contact with the cutting tool 280 during the cutting operation. FIG. 2F illustrates the cutting tool 280 inserted into the channel 264 of the cutting guide 262 to cut the cable tie 260. After the cable tie 260 is cut, the user may remove the cut cable tie 260, change the component(s) 290 positioned on the first receiver 236, and add a new cable tie (not illustrated) to bundle the component(s) 290 on the support arm 232 in the first receiver 236.

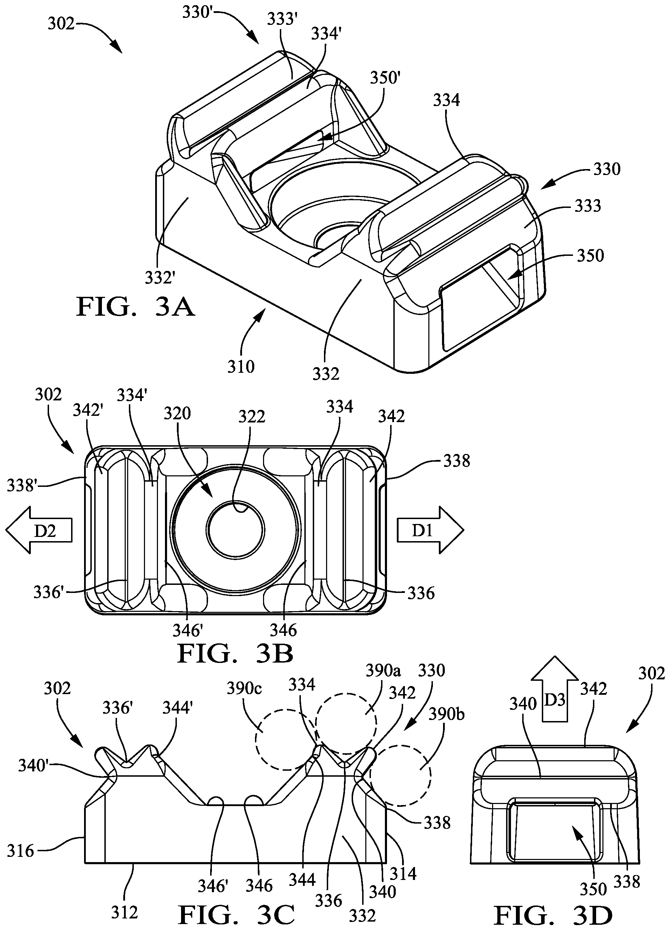

Referring now to FIGs. 3A-3D, illustrated is a cable tie mount fixing (fixing 302) with a cutting guide that is configured for use in a system (e.g., system 100, system 200) that includes a cable tie (e.g., cable tie 160, cable tie 260), a workpiece (e.g., workpiece 170, workpiece 270), a cutting tool (e.g., cutting tool 180, cutting tool 280), and component(s) (e.g., component(s) 190, component(s) 290). The fixing 302 is configured for receiving, securing, and/or supporting the component(s) relative to the workpiece. The fixing 302 is similar to the fixing 102 and fixing 202 illustrated in FIGs. 1 and 2A-2F and described above, except as described below. Thus, the fixing 302 includes a body section 310, a mounting section 320, a connector 322, an object support (e.g., object support 330, object support 330'), a support arm (e.g., support arm 332), flanges (e.g., a first flange 334, a second flange 338, a third flange 342, a fourth flange 346), receivers (e.g., a first receiver 336, a second receiver 340, a third receiver 344), and a tie aperture (e.g., tie aperture 350, tie aperture 350').

The first receiver 336 is defined between the first flange 334 and the third flange 342. A first component 390a is illustrated in dotted-line fashion received within the first receiver 336. The second receiver 340 is defined between the second flange 338 and the third flange 342. A second component 390b is illustrated in dotted-line fashion received within the second receiver 340. The third receiver 344 is defined between the second flange 338 and the fourth flange 346. A third component 390c is illustrated in dotted-line fashion received within the third receiver 344. A cable tie (e.g., cable tie 160, cable tie 260) could be utilized to attach the component (e.g., first component 390a, second component 390b, third component 390c) within the respective receiver, as illustrated in FIGs. 2E and 2F.

FIG. 3A is a perspective view of the fixing 302, FIG. 3B is a plan view of the fixing 302, FIG. 3C is a front side view of the fixing 302, and FIG. 3D is a first end view of the fixing 302. The fixing 302 includes a body section 310 having a base 312 that is configured to mount on the workpiece (e.g., workpiece 170, workpiece 270). The base 312 includes a base first end 314 that extends to a base second end 316. A length of the fixing 302 may be defined between the base first end 314 and the base second end 316. The base 312 defines a base plane. The mounting section 320 is configured to attach the fixing 302 to the workpiece (e.g., workpiece 170, workpiece 270). The mounting section 320 of the fixing 302 includes a connector 322. In the fixing 302 illustrated, the connector 322 is a fastener aperture (e.g., a recessed fastener aperture) that is defined through the mounting section 320. The connector 322 is configured to receive a fastener therethrough (e.g., as illustrated with respect to the connector 222 illustrated in FIGs. 2A-2F). In this way, the fixing 302 can be attached to the workpiece. In other aspects, the connector 322 may be of another form, as described above with respect to FIG. 1.

The fixing 302 may include one or more object supports (e.g., object support 330, object support 330'), which are configured to support one or more components (e.g., component(s) 190, component(s) 290). The object supports (e.g., object support 330, object support 330') may be substantial mirror images of one another. The object support (e.g., object support 330) includes at least one support arm (e.g., support arm 332, support arm 332') that is configured to space the supported component(s) apart from the mounting section 320 and/or from the workpiece (e.g., workpiece 170, workpiece 270).

The support arm (e.g., support arm 332, support arm 332') includes an outer surface (e.g., outer surface 333, outer surface 333'). One or more flanges (e.g., first flange 334, first flange 334', second flange 338, second flange 338', third flange 342, third flange 342', fourth flange 346, fourth flange 346') are defined in, are defined relative to, and/or extend from the outer surface of the support arm. In the aspect illustrated in FIGs. 3A-3D, the first flange 334 extends along a first flange axis, the second flange 338 extends along a second flange axis, the third flange 342 extends along a third flange axis, and the fourth flange 346 extends along a fourth flange axis, with the axes parallel to one another, for example, as illustrated with respect to the aspect of FIG. 2B. Likewise, the first flange 334', second flange 338', and third flange 342' may define similar flange axes. The flanges are spaced apart from one another.

The support arm (e.g., support arm 332) defines at least one receiver that is positioned between a pair of spaced apart flanges. A receiver may be configured as a saddle and/or as a cut zone, as described above with respect to the fixing 102 of FIG. 1 and/or fixing 202 of FIGs. 2A-2F. The support arm defines a first receiver (e.g., first receiver 336, first receiver 336') between a first pair of spaced apart flanges (e.g., first flange 334 and third flange 342, first flange 334' and third flange 342'), defines a second receiver (e.g., second receiver 340, second receiver 340') between a second pair of spaced apart flanges (e.g., second flange 338 and third flange 342, second flange 338' and third flange 342'), and defines a third receiver (e.g., third receiver 344, third receiver 344') between a third pair of spaced apart flanges (e.g., second flange 338 and fourth flange 346, second flange 338' and fourth flange 346').

In the aspect of FIGs. 3A-3D, one or more of the receivers of the fixing 302 are dual-purpose, interchangeable receivers that are configured in a hybrid configuration. In the hybrid configuration, a receiver can be used in either a saddle configuration (e.g., as described above with respect to the first receiver 236 of the fixing 202) and/or in a cut-zone configuration (e.g., as described above with respect to the second receiver 240 of the fixing 202). In the saddle configuration, the receiver defines a saddle that is configured for receiving component(s). A cable tie is used to attach the component to the saddle. In the saddle configuration, the receiver is configured to locate (e.g., position, hold) the component(s) in a routed position on the support arm. In the cut-zone configuration, the receiver defines a cutting guide that is bridged (e.g., spanned) by the cable tie. The cutting guide is configured to guide a user when the user acts to cut the cable tie through use of a cutting tool (e.g., cutting tool 180, cutting tool 280) to free the component(s) attached to the fixing (e.g., held in a saddle of the fixing).

### Additional Examples

Some additional examples of fixings with cutting guides are as follows:
Example 1. A fixing comprising: a body section configured to mount on a workpiece; an object support configured to support a component, the object support comprising: a support arm extending from the body section, the support arm comprising: an outer surface; a first flange, the first flange extending from the outer surface along a first flange axis; a second flange, the second flange extending from the outer surface, the second flange parallel to the first flange, the second flange spaced apart from the first flange; a third flange, the third flange extending from the outer surface, the third flange parallel to the first and second flanges, the third flange positioned between the first and second flanges, the third flange spaced apart from the first and second flanges; a first receiver defined between the first and third flanges; and a second receiver defined between the second and third flanges; and a tie aperture configured to receive a cable tie, the tie aperture defined through at least one of the body section or the object support.
Example 2. The fixing of Example 1, further comprising: a second object support configured to support a second component, the second object support comprising: a second support arm extending from the body section, the second support arm comprising: a second outer surface; a fourth flange, the fourth flange extending from the second outer surface along a fourth flange axis; a fifth flange, the fifth flange extending from the second outer surface, the fifth flange parallel to the fourth flange, the fifth flange spaced apart from the fourth flange; a sixth flange, the sixth flange extending from the second outer surface, the sixth flange parallel to the fourth and fifth flanges, the sixth flange positioned between the fourth and fifth flanges, the sixth flange spaced apart from the fourth and fifth flanges; a third receiver defined between the fourth and fifth flanges; and a fourth receiver defined between the fifth and sixth flanges; and a second tie aperture configured to receive a second cable tie, the second tie aperture defined through at least one of the body section or the second object support.
Example 3. The fixing of Example 2, wherein the body section includes a mounting section, wherein the object support and the second object support are located on opposite sides of the body section with the mounting section therebetween.
Example 4. The fixing of Example 2, wherein the first receiver is configured for receiving the component, and wherein the second receiver is configured for receiving a cutting tool for cutting the cable tie.
Example 5. The fixing of Example 2, wherein the third receiver is configured for receiving the second component, and wherein the fourth receiver is configured for receiving a cutting tool for cutting the second cable tie.
Example 6. The fixing of Example 2, wherein the body section includes a base, the base including a base first end that extends to a base second end and defining a base plane therebetween, wherein the fixing defines a center axis that is orthogonal to the base plane, wherein the second receiver is outwardly facing in a first direction away from the center axis, and wherein the fourth receiver is outwardly facing in a second direction away from the center axis.
Example 7. The fixing of Example 6, wherein the first direction and the second direction are opposite directions.
Example 8. The fixing of Example 6, wherein the first receiver and the third receiver are upwardly facing in a third direction away from the base plane.
Example 9. The fixing of Example 8, wherein the third direction is orthogonal to at least one of the first direction or the second direction.
Example 10. The fixing of Example 2, wherein the first flange, the second flange, and the third flange radially extend from the outer surface, and wherein the fourth flange, the fifth flange, and the sixth flange radially extend from the second outer surface.
Example 11. The fixing of Example 1, wherein the body section comprises: a base that includes a base first end that extends to a base second end, the base defining a base plane.
Example 12. The fixing of Example 11, wherein the fixing defines a center axis that is orthogonal to the base plane, wherein the first flange, the second flange, and the third flange radially extend from the outer surface, and wherein the first flange axis is orthogonal to the center axis.
Example 13. The fixing of Example 11, wherein the body section includes a mounting section, wherein the mounting section is spaced apart from the base first end and the base second end, and wherein the tie aperture comprises an inner opening adjacent the mounting section, an outer opening in the base first end, and a passageway extending therebetween, the tie aperture configured to guide the cable tie below the support arm.
Example 14. The fixing of Example 13, wherein the passageway defines a ramp portion that extends from the outer opening to the inner opening oblique to the base plane, the ramp portion configured to guide the cable tie.
Example 15. The fixing of Example 1, wherein the body section includes a mounting section, and wherein the mounting section includes a connector configured for connecting the mounting section to the workpiece.
Example 16. The fixing of Example 15, wherein the connector is an aperture that is defined through the mounting section, the aperture configured to receive a fastener that engages a mounting aperture that is defined in the workpiece.
Example 17. The fixing of Example 1, wherein the second receiver is V-shaped.
Example 18. A fixing comprising: a body section configured to mount on a workpiece; an object support configured to support a component, the object support comprising: a support arm extending from the body section, the support arm comprising: an outer surface; a first flange, the first flange extending from the outer surface along a first flange axis; a second flange, the second flange extending from the outer surface, the second flange parallel to the first flange, the second flange spaced apart from the first flange; a third flange, the third flange extending from the outer surface, the third flange parallel to the first and second flanges, the third flange positioned between the first and second flanges, the third flange spaced apart from the first and second flanges; a first receiver defined between the first and third flanges; and a second receiver defined between the second and third flanges; and a tie aperture configured to receive a cable tie, the tie aperture defined through at least one of the body section or the object support; a second object support configured to support a second component, the second object support comprising: a second support arm extending from the body section, the second support arm comprising: a second outer surface; a fourth flange, the fourth flange extending from the second outer surface along a fourth flange axis; a fifth flange, the fifth flange extending from the second outer surface, the fifth flange parallel to the fourth flange, the fifth flange spaced apart from the fourth flange; a sixth flange, the sixth flange extending from the second outer surface, the sixth flange parallel to the fourth and fifth flanges, the sixth flange positioned between the fourth and fifth flanges, the sixth flange spaced apart from the fourth and fifth flanges; a third receiver defined between the fourth and fifth flanges; and a fourth receiver defined between the fifth and sixth flanges; and a second tie aperture configured to receive a second cable tie, the second tie aperture defined through at least one of the body section or the second object support.
Example 19. The fixing of Example 18, wherein the first receiver is configured for receiving the component, wherein the second receiver is configured for receiving a cutting tool for cutting the cable tie, wherein the third receiver is configured for receiving the second component, and wherein the fourth receiver is configured for receiving the cutting tool for cutting the second cable tie.
Example 20. The fixing of Example 18, wherein the body section includes a base, the base including a base first end that extends to a base second end and defining a base plane therebetween, wherein the fixing defines a center axis that is orthogonal to the base plane, wherein the second receiver is outwardly facing in a first direction away from the center axis, wherein the fourth receiver is outwardly facing in a second direction away from the center axis, wherein the first direction and the second direction are opposite directions, and wherein the first receiver and the third receiver are upwardly facing in a third direction away from the base plane.

### Alternative Language

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

### Conclusion

Although implementations of fixings with cutting guides have been described in language specific to certain features and/or methods, the subject of the appended claims is not necessarily limited to the specific features or methods described. Rather, the specific features and methods are disclosed as example implementations of fixings with cutting guides.

## Claims

1. A fixing comprising:
a body section configured to mount on a workpiece;
an object support configured to support a component, the object support comprising:
a support arm extending from the body section, the support arm comprising:
an outer surface;
a first flange, the first flange extending from the outer surface along a first flange axis;
a second flange, the second flange extending from the outer surface, the second flange parallel to the first flange, the second flange spaced apart from the first flange;
a third flange, the third flange extending from the outer surface, the third flange parallel to the first and second flanges, the third flange positioned between the first and second flanges, the third flange spaced apart from the first and second flanges;
a first receiver defined between the first and third flanges; and
a second receiver defined between the second and third flanges; and
a tie aperture configured to receive a cable tie, the tie aperture defined through at least one of the body section or the object support.

2. The fixing of claim 1, further comprising:
a second object support configured to support a second component, the second object support comprising:
a second support arm extending from the body section, the second support arm comprising:
a second outer surface;
a fourth flange, the fourth flange extending from the second outer surface along a fourth flange axis;
a fifth flange, the fifth flange extending from the second outer surface, the fifth flange parallel to the fourth flange, the fifth flange spaced apart from the fourth flange;
a sixth flange, the sixth flange extending from the second outer surface, the sixth flange parallel to the fourth and fifth flanges, the sixth flange positioned between the fourth and fifth flanges, the sixth flange spaced apart from the fourth and fifth flanges;
a third receiver defined between the fourth and fifth flanges; and
a fourth receiver defined between the fifth and sixth flanges; and
a second tie aperture configured to receive a second cable tie, the second tie aperture defined through at least one of the body section or the second object support.

3. The fixing of claim 2,
wherein the body section includes a mounting section,
wherein the object support and the second object support are located on opposite sides of the body section with the mounting section therebetween.

4. The fixing of any one of the preceding claims,
wherein the first receiver is configured for receiving the component, and
wherein the second receiver is configured for receiving a cutting tool for cutting the cable tie.

5. The fixing of any one of claims 2 to 4,
wherein the third receiver is configured for receiving the second component, and
wherein the fourth receiver is configured for receiving a cutting tool for cutting the second cable tie.

6. The fixing of any one of claims 2 to 5,
wherein the body section includes a base, the base including a base first end that extends to a base second end and defining a base plane therebetween,
wherein the fixing defines a center axis that is orthogonal to the base plane,
wherein the second receiver is outwardly facing in a first direction away from the center axis, and
wherein the fourth receiver is outwardly facing in a second direction away from the center axis,
in particular with the first direction and the second direction being opposite directions.

7. The fixing of claim 6, wherein the first receiver and the third receiver are upwardly facing in a third direction away from the base plane, in particular with the third direction being orthogonal to at least one of the first direction or the second direction.

8. The fixing of any one of claims 2 to 7,
wherein the first flange, the second flange, and the third flange radially extend from the outer surface, and
wherein the fourth flange, the fifth flange, and the sixth flange radially extend from the second outer surface.

9. The fixing of any one of the preceding claims, wherein the body section comprises:
a base that includes a base first end that extends to a base second end, the base defining a base plane.

10. The fixing of claim 9,
wherein the fixing defines a center axis that is orthogonal to the base plane,
wherein the first flange, the second flange, and the third flange radially extend from the outer surface, and
wherein the first flange axis is orthogonal to the center axis.

11. The fixing of any one of claims 9 to 10,
wherein the body section includes a mounting section,
wherein the mounting section is spaced apart from the base first end and the base second end, and
wherein the tie aperture comprises an inner opening adjacent the mounting section, an outer opening in the base first end, and a passageway extending therebetween, the tie aperture configured to guide the cable tie below the support arm.

12. The fixing of claim 11, wherein the passageway defines a ramp portion that extends from the outer opening to the inner opening oblique to the base plane, the ramp portion configured to guide the cable tie.

13. The fixing of any one of the preceding claims,
wherein the body section includes a mounting section, and
wherein the mounting section includes a connector configured for connecting the mounting section to the workpiece.

14. The fixing of claim 13, wherein the connector is an aperture that is defined through the mounting section, the aperture configured to receive a fastener that engages a mounting aperture that is defined in the workpiece.

15. The fixing of any one of the preceding claims, wherein the second receiver is V-shaped.
